# EUROPÄISCHE PATENTANMELDUNG

(11) **EP 1 403 154 A1**
(43) Veröffentlichungstag der Anmeldung: **31.03.2004**
(21) Anmeldenummer: 03021230.2
(22) Anmeldetag: 18.09.2003
(51) Int. Cl.: B60R 25/10, G08B 13/194, G01B 11/25, G06T 7/20

(54) **Verfahren und System zur Innenraumüberwachung**

(30) Priorität: 25.09.2002 DE 10244719
(71) Anmelder: Delphi Technologies, Inc., Troy, MI 48007 (US)
(72) Erfinder: Langenbach, Julia, Dr., 57482 Wenden (DE)
(74) Vertreter: Manitz, Finsterwald & Partner GbR

(57) **Zusammenfassung**

Es wird ein Verfahren zur Innenraumüberwachung, insbesondere Kfz-Innenraumüberwachung angegeben, bei dem mittels wenigstens einer optischen Sendeeinheit ein Liniengitter aus hellen und dunklen Linien in den zu überwachenden Raum projiziert wird, mittels wenigstens einer optischen Empfangseinheit aus dem zu überwachenden Raum reflektiertes Licht empfangen wird, anhand eines entsprechenden optischen Empfangssignals die aktuelle Form des reflektierten Liniengitters ermittelt wird und die aktuelle Form des reflektierten Liniengitters mit einer zuvor ermittelten, als Referenz dienenden Liniengitterform verglichen wird.

## Beschreibung

Die Erfindung betrifft ein Verfahren und ein System zur Innenraumüberwachung, insbesondere Kfz-Innenraumüberwachung.

Eine entsprechende Innenraumüberwachung kann insbesondere Bestandteil eines Kraftfahrzeug-Alarmsystems sein. Allgemein geht es insbesondere darum, ein unerlaubtes Eindringen in den zu überwachten Innenraum zu erkennen. Neben einer möglichst hohen Erkennungsrate von eindringenden Objekten besteht ein weiteres wichtiges Kriterium in einer möglichst niedrigen Fehlalarmrate.

Es existiert eine Vielzahl von optischen Innenraumschutz-Systemen, bei denen mittels eines Kamerasystems ein unerlaubtes Eindringen in den überwachten Raum erkannt werden soll. Die meisten dieser Systeme beschränken sich auf eine Art Bewegungserfassung und eine darauf folgende Bilderfassung, um herauszufinden, ob die festgestellte Bewegung als unerlaubtes Eindringen zu werten ist oder nicht. Bewegungserfassungsalgorithmen basieren auf dem Prinzip eines Bildvergleichs. Ergeben sich gegenüber einem zuvor gespeicherten Bild Änderungen, so erfolgt eine entsprechende Analyse.

Bei derartigen optischen Innenraumschutz-Systemen kann es nun aber zu Problemen kommen. Scheint beispielsweise die Sonne oder ist irgendeine andere Art einer externen Beleuchtung vorhanden, so treten innerhalb des Fahrzeugs stets Schatten von sich außerhalb des Fahrzeugs befindenden Objekten auf. Bewegen sich diese Objekte, so bewegen sich entsprechend auch deren Schatten. Ist ein jeweiliges Fahrzeug beispielsweise in der Nähe eines Baumes geparkt, so bewegen sich die Baumzweige im Wind, was auch eine entsprechende Bewegung der betreffenden Schatten innerhalb des Fahrzeugs mit sich bringt. Ein normaler Bewegungsdetektor wird nun auf solche Bewegungen reagieren und die betreffende Analyse auslösen. Soweit überhaupt die Möglichkeit besteht, zwischen dem Schatten und wirklichen, in den Innenraum eindringenden Objekten zu unterscheiden, ist eine entsprechende Bildverarbeitung und -analyse mit einem großen Rechenaufwand verbunden. Entsprechend ergibt sich auch ein hoher Energieverbrauch, was für die betreffende Innenraumüberwachung kritisch sein kann.

Der Erfindung liegt die Aufgabe zugrunde, ein verbessertes Verfahren sowie ein verbessertes Innenraumüberwachungssystem der eingangs genannten Art zu schaffen, bei denen die zuvor genannten Nachteile beseitigt sind.

Diese Aufgabe wird erfindungsgemäß gelöst durch ein Verfahren zur Innenraumüberwachung, insbesondere Kfz-Innenraumüberwachung, bei dem mittels wenigstens einer optischen Sendeeinheit ein Liniengitter aus hellen und dunklen Linien in den zu überwachenden Raum projiziert wird, mittels wenigstens einer optischen Empfangseinheit aus dem zu überwachenden Raum reflektiertes Licht empfangen wird, anhand eines entsprechenden optischen Empfangssignals die aktuelle Form des reflektierten Liniengitters ermittelt wird und die aktuelle Form des reflektierten Liniengitters mit einer zuvor ermittelten, als Referenz dienenden Liniengitterform verglichen wird.

Erfindungsgemäß kann also insbesondere ein so genanntes Stereovision-Verfahren angewandt werden, bei dem ein aus dunklen bzw. hellen Linien bestehendes Gitter auf die betrachteten Objekte projiziert und dann die Form der Gitterlinien analysiert wird. Ist ein betreffendes Objekt beispielsweise eben, so bleibt das Gitter rechtwinklig. Andernfalls kann die Form des betreffenden Objekts aus dem Gitter berechnet werden. Diese als solche bekannte Technik kann auch zur Abstandsmessung bezüglich eines jeweiligen Objekt eingesetzt werden.

Aufgrund der erfindungsgemäßen Ausgestaltung kann auf einfache und entsprechend kostengünstige Weise zum Beispiel ein Bewegungsdetektor verwirklicht werden, der auf der Basis relativ einfacher Algorithmen bei geringem Rechenaufwand, das heißt geringer bereitzustellender Rechenleistung arbeitet. Der Energieverbrauch wird auf ein Minimum reduziert. Das betreffende Überwachungssystem ist gegenüber sich bewegenden Schatten oder in den Innenraum gerichteten Lichtquellen resistent. Die Fehlalarmrate ist also auf ein Minimum reduziert. Überdies wird der Speicherbedarf entsprechend verringert. Es muss nämlich nicht mehr das vollständige empfangene Bild gesichert oder gespeichert werden, es genügt, wenn die Form der Gitterlinien gesichert bzw. gespeichert wird.

Die als Referenz dienende Liniengitterform wird vorzugsweise anhand eines vorangehenden optischen Empfangssignals ermittelt.

Gemäß einer zweckmäßigen praktischen Ausgestaltung des erfindungsgemäßen Verfahrens wird die als Referenz dienende Liniengitterform in einer Speichereinheit gespeichert und für einen jeweiligen Vergleich mit einer aktuellen Liniengitterform aus dieser Speichereinheit abgerufen. Dabei wird als Referenz vorzugsweise ausschließlich die jeweilige Liniengitterform gespeichert, womit der Speicherbedarf entsprechend reduziert wird.

Vorteilhafterweise wird eine jeweilige aktuelle Liniengitterform als Referenz für einen Vergleich mit wenigstens einer darauf folgend ermittelten aktuellen Liniengitterform herangezogen. Eine jeweilige Referenz-Gitterform kann also durch eine jeweilige aktuelle Liniengitterform ersetzt werden.

Prinzipiell kann eine jeweilige Referenz-Liniengitterform nach jedem Vergleich durch die jeweils aktuelle Liniengitterform ersetzt werden. Grundsätzlich ist jedoch auch eine solche Ausgestaltung des erfindungsgemäßen Verfahrens denkbar, dass eine jeweilige, als Referenz dienende Liniengitterform für einen Vergleich mit zumindest zwei zeitlich aufeinander folgend ermittelten aktuellen Liniengitterformen aufrechterhalten wird.

Gemäß einer bevorzugten praktischen Ausgestaltung werden im Rahmen eines jeweiligen Gitterformvergleichs Formen der Gitterlinien miteinander verglichen. Alternativ oder zusätzlich können im Rahmen eines jeweiligen Gitterformvergleichs insbesondere auch Gitterlinienabstände miteinander verglichen werden.

Wie bereits erwähnt, wird vorzugsweise eine auf der Basis des Stereovision-Verfahrens arbeitende optische oder optoelektronische Sensorik und/oder Auswerteeinrichtung eingesetzt.

Bevorzugt ist insbesondere eine solche Ausgestaltung des erfindungsgemäßen Verfahrens, bei der die erhaltenen Bild- bzw. Gitterinformationen zur Bewegungserkennung herangezogen werden.

Es kann beispielsweise zumindest eine 3D-Kamera eingesetzt werden. Grundsätzlich muss jedoch nicht zwingend eine 3D-Kamera eingesetzt und Stereovision betrieben werden. Z.B. für einen einfachen Bewegungsmelder reicht auch beispielsweise eine normale Kamera und eine Beleuchtungseinheit mit dem Gittermuster davor. Man kann es z.B. dazu benutzen, den Abstand zum Objekt zu messen, was jedoch ebenfalls nicht zwingend notwendig ist.

Gemäß einer bevorzugten praktischen Ausgestaltung des erfindungsgemäßen Verfahrens werden im Zusammenhang mit einer jeweiligen Aktivierung der betreffenden Sensorik jeweils nur die betreffenden Gitterformen miteinander verglichen und eventuelle Gitterformänderungen analysiert. Damit ist der erforderliche Rechenaufwand auf ein Minimum reduziert.

Vorzugsweise wird wenigstens eine CCD-Kamera und/oder wenigstens eine CMOS-Kamera eingesetzt (CCD = charge coupled device; CMOS = complementary MOS).

Die eingangs angegebene Aufgabe wird erfindungsgemäß überdies gelöst durch ein Innenraumüberwachungssystem, insbesondere Kfz-Innenraumüberwachungssystem, mit wenigstens einer optischen Sendeeinheit, mittels der ein Liniengitter aus hellen und dunklen Linien in den zu überwachenden Raum projizierbar ist, wenigstens einer optischen Empfangseinheit für den Empfang reflektierten Lichtes aus dem zu überwachenden Raum und einer Auswerteeinrichtung zur Ermittlung der aktuellen Form des reflektierten Liniengitters anhand eines entsprechenden optischen Empfangssignals und für einen Vergleich der aktuellen Form des reflektierten Liniengitters mit einer zuvor ermittelten, als Referenz dienenden Liniengitterform.

Bevorzugte Ausführungsformen des erfindungsgemäßen Innenraumüberwachungssystems sind in den Unteransprüchen angegeben.

Erfindungsgemäß kann somit für den in Rede stehenden Innenraumschutz insbesondere die so genannte Gitter-Technik eingesetzt werden, um zum Beispiel einen äußerst einfachen Bewegungsdetektor zu erhalten, der gegenüber bewegten Schatten resistent ist. Man projiziert ein Liniengitter in das Innere beispielsweise eines Fahrzeugs. Anstatt des kompletten Empfangsbildes wird nur die Gitterform gespeichert. Im Vergleich mit den herkömmlichen Systemen ergibt sich also ein entsprechend geringerer Speicherbedarf. Danach werden in Zusammenhang mit der jeweiligen Aktivierung des Innenraumüberwachungssensors ausschließlich die Form des Gitters und deren eventuelle Änderungen analysiert. Das System sollte also zumindest im Wesentlichen nur dann entsprechend zu arbeiten beginnen und eine Bildanalyse durchführen, wenn die Linienform oder der Abstand zwischen den Linien sich ändert, was nur bei realen, sich bewegenden Objekten und nicht bei Schatten der Fall ist.

## Patentansprüche

1. Verfahren zur Innenraumüberwachung, insbesondere Kfz-Innenraumüberwachung, bei dem mittels wenigstens einer optischen Sendeeinheit ein Liniengitter aus hellen und dunklen Linien in den zu überwachenden Raum projiziert wird, mittels wenigstens einer optischen Empfangseinheit aus dem zu überwachenden Raum reflektiertes Licht empfangen wird, anhand eines entsprechenden optischen Empfangssignals die aktuelle Form des reflektierten Liniengitters ermittelt wird und die aktuelle Form des reflektierten Liniengitters mit einer zuvor ermittelten, als Referenz dienenden Liniengitterform verglichen wird.

2. Verfahren nach Anspruch 1,
**dadurch gekennzeichnet,**
**dass** die als Referenz dienende Liniengitterform anhand eines vorangehenden optischen Empfangssignals ermittelt wird.

3. Verfahren nach Anspruch 1 oder 2,
**dadurch gekennzeichnet,**
**dass** die als Referenz dienende Liniengitterform in einer Speichereinheit gespeichert und für einen jeweiligen Vergleich mit einer aktuellen Liniengitterform aus dieser Speichereinheit abgerufen wird.

4. Verfahren nach Anspruch 3,
**dadurch gekennzeichnet,**
**dass** als Referenz ausschließlich die jeweilige Liniengitterform gespeichert wird.

5. Verfahren nach einem der vorhergehenden Ansprüche,
**dadurch gekennzeichnet,**
**dass** eine jeweilige aktuelle Liniengitterform als Referenz für einen Vergleich mit wenigstens einer darauf folgend ermittelten aktuellen Liniengitterform herangezogen wird.

6. Verfahren nach einem der vorhergehenden Ansprüche,
**dadurch gekennzeichnet,**
**dass** eine jeweilige als Referenz dienende Liniengitterform für einen Vergleich mit zumindest zwei zeitlich aufeinander folgend ermittelten aktuellen Liniengitterformen aufrechterhalten wird.

7. Verfahren nach einem der vorhergehenden Ansprüche,
**dadurch gekennzeichnet,**
**dass** im Rahmen eines jeweiligen Gitterformvergleichs Formen der Gitterlinien miteinander verglichen werden.

8. Verfahren nach einem der vorhergehenden Ansprüche,
**dadurch gekennzeichnet,**
**dass** im Rahmen eines jeweiligen Gitterformvergleichs Gitterlinienabstände miteinander verglichen werden.

9. Verfahren nach einem der vorhergehenden Ansprüche,
**dadurch gekennzeichnet,**
**dass** eine auf der Basis des Stereovision-Verfahrens arbeitende optisehe oder optoelektronische Sensorik und/oder Auswerteeinrichtung eingesetzt wird.

10. Verfahren nach einem der vorhergehenden Ansprüche,
**dadurch gekennzeichnet,**
**dass** die erhaltenen Bild- bzw. Gitterinformationen zur Bewegungserkennung herangezogen werden.

11. Verfahren nach einem der vorhergehenden Ansprüche,
**dadurch gekennzeichnet,**
**dass** zumindest eine 3D-Kamera eingesetzt wird.

12. Verfahren nach einem der vorhergehenden Ansprüche,
**dadurch gekennzeichnet,**
**dass** im Zusammenhang mit einer jeweiligen Aktivierung der betreffenden Sensorik jeweils nur die betreffenden Gitterformen miteinander verglichen und eventuelle Gitterformänderungen analysiert werden.

13. Verfahren nach einem der vorhergehenden Ansprüche,
**dadurch gekennzeichnet,**
**dass** wenigstens eine CCD-Kamera eingesetzt wird.

14. Verfahren nach einem der vorhergehenden Ansprüche,
**dadurch gekennzeichnet,**
**dass** wenigstens eine CMOS-Kamera eingesetzt wird.

15. Innenraumüberwachungssystem, insbesondere Kfz-Innenraumüberwachungssystem, mit wenigstens einer optischen Sendeeinheit, mittels der ein Liniengitter aus hellen und dunklen Linien in den zu überwachenden Raum projizierbar ist, wenigstens einer optischen Empfangseinheit für den Empfang reflektierten Lichtes aus dem zu überwachenden Raum und einer Auswerteeinrichtung zur Ermittlung der aktuellen Form des reflektierten Liniengitters anhand eines entsprechenden optischen Empfangssignals und für einen Vergleich der aktuellen Form des reflektierten Liniengitters mit einer zuvor ermittelten, als Referenz dienenden Liniengitterform.

16. Innenraumüberwachungssystem nach Anspruch 15,
**dadurch gekennzeichnet,**
**dass** mittels der Auswerteeinrichtung die als Referenz dienende Liniengitterform anhand eines vorangehenden optischen Empfangssignals ermittelbar ist.

17. Innenraumüberwachungssystem nach Anspruch 15 oder 16,
**dadurch gekennzeichnet,**
**dass** die als Referenz dienende Liniengitterform in einer Speichereinheit speicherbar und für einen jeweiligen Vergleich mit einer aktuellen Liniengitterform aus dieser Speichereinheit abrufbar ist.

18. Innenraumüberwachungssystem nach Anspruch 17,
**dadurch gekennzeichnet,**
**dass** als Referenz ausschließlich die jeweilige Liniengitterform gespeichert wird.

19. Innenraumüberwachungssystem nach einem der vorhergehenden Ansprüche,
**dadurch gekennzeichnet,**
**dass** durch die Auswerteeinrichtung eine jeweilige aktuelle Liniengitterform als Referenz für einen Vergleich mit wenigstens einer darauf folgend ermittelten aktuellen Liniengitterform herangezogen wird.

20. Innenraumüberwachungssystem nach einem der vorhergehenden Ansprüche,
**dadurch gekennzeichnet,**
**dass** eine jeweilige als Referenz dienende Liniengitterform für einen Vergleich mit zumindest zwei zeitlich aufeinander folgend ermittelten aktuellen Liniengitterformen aufrechterhalten wird.

21. Innenraumüberwachungssystem nach einem der vorhergehenden Ansprüche,
**dadurch gekennzeichnet,**
**dass** mittels der Auswerteeinrichtung im Rahmen eines jeweiligen Gitterformvergleichs Formen der Gitterlinien miteinander vergleichbar sind.

22. Innenraumüberwachungssystem nach einem der vorhergehenden Ansprüche,
**dadurch gekennzeichnet,**
**dass** mittels der Auswerteeinrichtung im Rahmen eines jeweiligen Gitterformvergleichs Gitterlinienabstände miteinander vergleichbar sind.

23. Innenraumüberwachungssystem nach einem der vorhergehenden Ansprüche,
**dadurch gekennzeichnet,**
**dass** eine auf der Basis des Stereovision-Verfahrens arbeitende optische oder optoelektronische Sensorik und/oder Auswerteeinrichtung vorgesehen ist.

24. Innenraumüberwachungssystem nach einem der vorhergehenden Ansprüche,
**dadurch gekennzeichnet,**
**dass** mittels der Auswerteeinrichtung die erhaltenen Bild- bzw. Gitterinformationen zur Bewegungserkennung heranziehbar sind.

25. Innenraumüberwachungssystem nach einem der vorhergehenden Ansprüche,
**dadurch gekennzeichnet,**
**dass** zumindest eine 3D-Kamera vorgesehen ist.

26. Innenraumüberwachungssystem nach einem der vorhergehenden Ansprüche,
**dadurch gekennzeichnet,**
**dass** im Zusammenhang mit einer jeweiligen Aktivierung der betreffenden Sensorik jeweils nur die betreffenden Gitterformen miteinander verglichen und eventuelle Gitterformänderungen analysiert werden.

27. Innenraumüberwachungssystem nach einem der vorhergehenden Ansprüche,
**dadurch gekennzeichnet,**
**dass** wenigstens eine CCD-Kamera vorgesehen ist.

28. Innenraumüberwachungssystem nach einem der vorhergehenden Ansprüche,
**dadurch gekennzeichnet,**
**dass** wenigstens eine CMOS-Kamera vorgesehen ist.
